# EUROPÄISCHE PATENTSCHRIFT

(11) **EP 2 193 838 B1**
(45) Veröffentlichungstag und Bekanntmachung des Hinweises auf die Patenterteilung: **02.03.2011**
(21) Anmeldenummer: 08170989.1
(22) Anmeldetag: 08.12.2008
(51) Int. Cl.: B01J 8/00, C08F 2/00, C08F 2/01, C04B 16/00, C04B 24/00, C08F 222/00

(54) **Semikontinuierlich betriebenes Verfahren zur Herstellung von Copolymeren**
Semi-continuous method for producing copolymers
Procédé de fonctionnement semi-continu destiné à la fabrication de copolymères

(43) Veröffentlichungstag der Anmeldung: 09.06.2010
(73) Patentinhaber: Construction Research & Technology GmbH, 83308 Trostberg (DE)
(72) Erfinder: Albrecht, Gerhard, 83209, Prien (DE); Mack, Helmut, 83278, Traunstein (DE); Lorenz, Klaus, 84539, Zangberg (DE); Vierle, Mario, 83512, Wasserburg (DE); Flakus, Silke, 85560, Ebersberg (DE); Wagner, Petra, 83308, Trostberg (DE); Scholz, Christian, 83308, Trostberg (DE); Grassl, Harald, 84550, Feichten an der Alz (DE); Wimmer, Barbara, 83342, Tacherting (DE)

(56) Entgegenhaltungen:
- EP-A- 0 736 553
- EP-A- 1 690 877
- WO-A-2005/075529
- DE-A1-102005 061 153

## Beschreibung

Die vorliegende Erfindung betrifft ein Verfahren zur Herstellung eines Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden.

In der Praxis erfolgt die Copolymerisation meist in der Semi-Batch-Fahrweise. Die WO 2005/075529 beschreibt ein semikontinuierliches Herstellungsverfahren für besagte Copolymere, in welchem das Polyethermakromonomer vorgelegt wird und anschließend das Säuremonomer über die Zeit der Vorlage zudosiert wird. Details der Zugabe des Säuremonomers , insbesondere das Zugabeprofil über die Zeit werden dabei nicht offenbart. Obwohl das beschriebene Verfahren bereits kostengünstig ist und als Verfahrensprodukt Hochleistungsfließmittel erhalten werden, besteht weiterhin ein Bestreben, die Wirtschaftlichkeit des Verfahrens sowie Qualität des Verfahrensprodukts noch weiter zu verbessern.

In der DE 10 2005 061153 A1 wird die Herstellung von Copolymeren auf Basis ungesättigter Mono- oder Dicarbonsäure-Derivate und Oxyalkylenglykol-Alkenylethern in einem Semibatch - Verfahren durch radikalische Copolymerisation beschrieben. Die EP 0 736 553 A beschreibt Copolymere auf Basis von Oxyalkylenglykol Alkenylethern und ungesättigten Dicarbonsäure-Derivaten und deren Herstellung in einem Semibatch - Verfahren. Es wird in beiden Schriften das Polyethermakromonomer vorgelegt und das Säuremonomer über die Zeit zudosiert, wobei jeweils keine Details des Zugabeprofils des Säuremonomers genannt werden.

EP 1 690 877 A1 beschreibt ein Semibatch-Verfahren zur Herstellung von Copolymeren als Zusatzmittel zu Zement, welches beinhaltet die Umsetzung mindestens einer ungesättigten Polyalkylenglykol - Monomerkomponente mit wenigstens einer ungesättigten organischen Säuremonomerkomponente, wobei die ungesättigte Polyalkylenglykol - Monomerkomponente im Reaktor vorgelegt wird und die ungesättigte organische Säuremonomerkomponente mit einer wenigstens einmal sich ändernden Zuführungsrate hinzugefügt wird. Das Verfahren beschreibt in den Beispielen Zugabeprofile des Säuremonomers über mehrere Stunden und nicht die erfindungsgemäßen Zugaberaten von 70 mol % des insgesamt eindosierten Säuremonomers innerhalb von 5 bis 19 Minuten.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel, eine gute Performance zeigen.

Die Lösung dieser Aufgabe ist Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer, Säuremonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, das molare Verhältnis von insgesamt eingesetztem Säuremonomer zu insgesamt eingesetztem Polyethermakromonomer 20 : 1 bis 1 : 1 beträgt, dass molare Verhältnis von in den Polymerisationsreaktor vorgelegten Säuremonomer zu dem in den Polymerisationsreaktor eindosierten Säuremonomer 10 : 1 bis 1 : 10 beträgt und die Dosierung des Säuremonomers mit der Maßgabe erfolgt, dass mindestens 70 Mol-% des insgesamt eindosierten Säuremonomers mit einer konstanten oder begrenzt variierenden Dosierrate innerhalb von 5 bis 19 Minuten eindosiert werden, wobei begrenzt variierende Dosierrate bedeutet, dass die maximale Zugaberate höchstens um den Faktor 3 höher ist als die minimale Zugaberate.

Als Säuremonomer sollen radikalisch copolymerisierbare, mindestens eine Kohlenstoffdoppelbindung aufweisende Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisende Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Ester wie Ethylacrylat). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Mit dem erfindungsgemäßen Verfahren kann ein qualitativ hochwertiges Copolymerprodukt in besonders wirtschaftlicher Art und Weise hergestellt werden. Die gute Qualität des Copolymerprodukts begründet sich mit der deutlich einheitlicheren Verteilung der Comonomereinheiten über die Polymerkette und damit deutlich verbesserter Dosiereffizienz sowie anwendungstechnischer Eigenschaften, wie Wasserreduktion und Erhalt der Verarbeitbarkeit über die Zeit.

Die Wirtschaftlichkeit des Verfahrens ergibt sich insbesondere aus den mit den kurzen Dosierzeiten verbundenen schnellen Reaktionszeiten. Es können pro Zeiteinheit mehr Ansätze gefahren werden, wodurch in der entsprechenden Anlage deutlich höhere Mengen an Copolymeren produziert werden können.

In einer bevorzugten Ausführungsform der Erfindung werden mindestens 85 Mol-% des insgesamt eindosierten Säuremonomers mit einer konstanten oder begrenzt variierenden Dosierrate innerhalb von 7 bis 17 Minuten eindosiert, wobei begrenzt variierende Dosierrate bedeutet, dass die maximale Zugaberate höchstens um den Faktor 1,7 höher, bevorzugt höchstens um den Faktor 1,15, höher ist als die minimale Zugaberate. In der Praxis wird meist mit einer konstanten Dosierrate gearbeitet.

In der Regel wird durch die Umsetzung des Säuremonomers eine Struktureinheit im Copolymer erzeugt, die gemäß einer der allgemeinen Formeln (Ia), (Ib), (Ic) und/oder (Id) ist 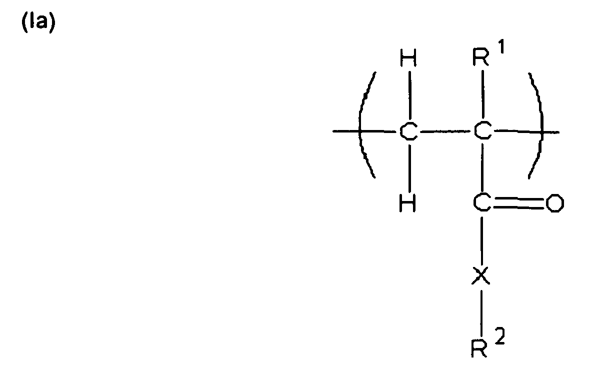 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 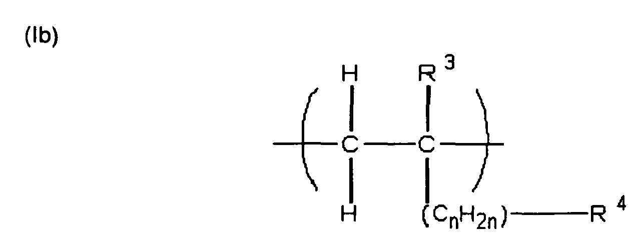 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 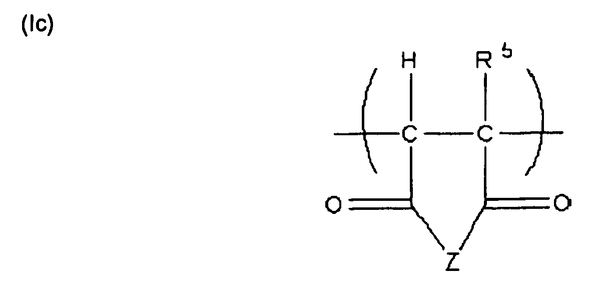 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 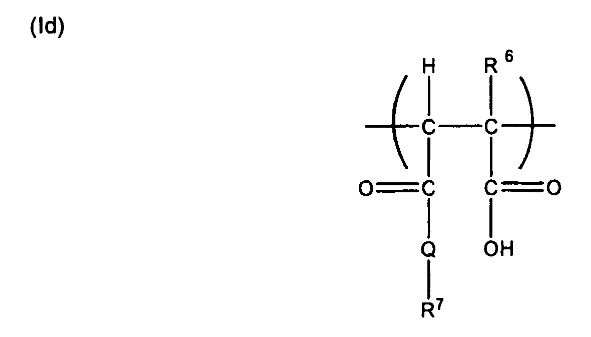 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = Cₓ·H₂ₓ· mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Meist wird als Säuremonomer Methacrylsäure, Acrylsäure, Maleinsäure, Maleinsäureanhydrid, ein Halbester der Maleinsäure oder eine Mischung aus mehreren dieser Komponenten eingesetzt. Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Meist wird durch die Umsetzung des Polyethermakromonomers eine Struktureinheit im Copolymer erzeugt, die gemäß einer der allgemeinen Formeln (IIa), (IIb) und/oder (IIc) ist 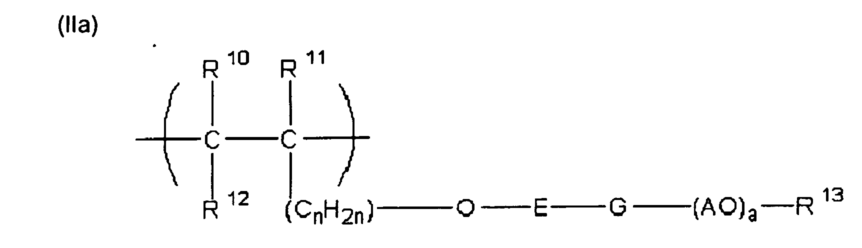 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 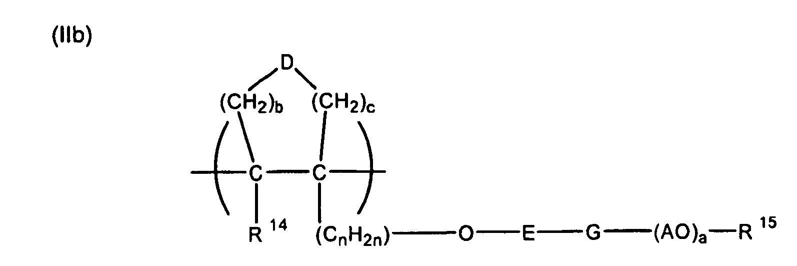 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 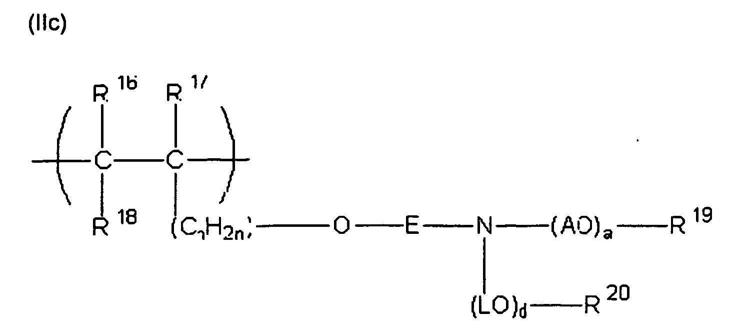 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

In der Regel wird als Polyethermakromonomer ein Vinylether mit bevorzugt einer arithmetisch mittleren Zahl an Oxyalkylengruppen von 4 bis 340 eingesetzt.

Häufig liegt der Vinylether als alkoxylierter 1,4-Dihydroxybutyl-1-vinylether mit bevorzugt einer arithmetisch mittleren Zahl an Oxyalkylengruppen von 7 bis 300 vor.

In einer weniger bevorzugten Ausführungsform kann als Polyethermakromonomer auch alkoxyliertes Isoprenol und/oder alkoxylierter (Meth)allylalkohol und/oder vinyliertes Methylpolyalkylenglykol und/oder alkoxylierter Diethylenglykol mit bevorzugt jeweils einer arithmetisch mittleren Zahl an Oxyalkylengruppen von 4 bis 300 eingesetzt werden.

Die Alkoxyeinheiten der Polyethermakromonomere liegen in der Regel als Ethoxygruppen oder als Gemisch aus Ethoxy- und Propoxygruppen vor (diese Polyethermakromonomere sind erhältlich aus der Ethoxylierung bzw. Propoxylierung der entsprechenden Monomeralkohole.

Zweckmäßigerweise wird das wässrige Medium während der Umsetzung gekühlt.

Meist wird ein H₂O₂ enthaltendes Redoxinitiatorsystem als radikalischer Polymerisationsinitiator eingesetzt, wobei vor der Eindosierung des Säuremonomers der pH-Wert des wässrigen Mediums 4,6 bis 14,0 sowie die Temperatur des wässrigen Mediums 5 bis 50 °C beträgt und nach der Eindosierung von 70 Mol-% des insgesamt eindosierten Säuremonomers der pH-Wert des wässrigen Mediums 4,8 bis 6,2 sowie die Temperatur des wässrigen Mediums 20 bis 70 °C, beträgt.

Typischerweise beträgt vor der Eindosierung des Säuremonomers die Temperatur des wässrigen Mediums 10 bis 29 °C, bevorzugt 15 bis 25 °C und nach der Eindosierung von 70 Mol-% des insgesamt eindosierten Säuremonomers 20 bis 49 °C, bevorzugt 25 bis 39 °C.

Häufig wird als radikalische Polymerisationsinitiator ein H₂O₂/FeSO₄ enthaltendes Redoxinitiatorsystem eingesetzt, welches zusammen mit einem Reduktionsmittel verwendet wird, wobei das Reduktionsmittel bevorzugt vorliegt in Form von Natriumsulfit, Dinatriumsalz der 2-Hydroxy-2-sulfinatoessigsäure, Dinatriumsalz der 2-Hydroxy-2-sulfonatoessigsäure, Natriumhydroxymethansulfinat, Ascorbinsäure und/oder Iso-Ascorbinsäure.

In der Regel liegt das wässrige Medium in Form einer wässrigen Lösung vor.

Meist werden insgesamt mindestens 45 Mol-%, bevorzugt mindestens 80 Mol-% aller Struktureinheiten des Copolymers durch Einpolymerisieren von Säuremonomer und Polyethermakromonomer erzeugt.

Häufig wird ein Kettenregler, welcher bevorzugt in gelöster Form vorliegt, in den Polymerisationsreaktor eingeleitet.

Das Copolymer kann beispielsweise auch (insbesondere in entwässerter Form) als Additiv für die Zementproduktion (Mahlhilfe und " Wasserreduzierer" für reine Portlandzemente bzw. Kompositzemente) eingesetzt werden.

Nachstehend soll die Erfindung anhand von Ausführungsbeispielen näher erläutert werden.

### Synthesebeispiel

In einem Glasreaktor - ausgestattet mit Rührer, pH-Elektrode und mehreren Zulaufeinrichtungen - wurden 150 g deionisiertes Wasser und 150 g Vinyloxybutylpolyethylenglykol-5800 (Anlagerungsprodukt aus 129 Mol Ethylenoxid an 4- Hydroxybutyl-1-monovinylether) vorgelegt und auf eine Polymerisationsstarttemperatur von 20 °C gekühlt (Vorlage).

In einem separaten Zulaufgefäß wurden 7,85 g Acrylsäure mit 18,08 g deionisiertem Wasser homogen vermischt. Anschließend wurden 1,52 g Maleinsäureanhydrid in dieser Mischung gelöst und 2,88 g einer 50 %igen Kaliumhydroxydlösung zugegeben (Lösung A)

Parallel wurde eine 6 %ige Lösung von Brüggolit ® E 01 (Handelsprodukt der Fa. Brüggemann Chemicals GmbH) in Wasser hergestellt (Lösung B).

Unter Rühren und Kühlen wurden zunächst 15,2 g der Lösung A zur Vorlage gegeben und danach 0,9 g 3-Mercaptopropionsäure zur restlichen Lösung gegeben.

Anschließend wurden nacheinander 0,3g 3-Mercaptopropionsäure, 0,059 g Eisen-11-sulfat-Heptahydrat und 0,45 g Wasserstoffperoxid (50 %ige Lösung in Wasser) zum Vorlagegemisch gegeben. Zeitgleich wurde mit der Zugabe von Lösung A und Lösung B zur gerührten Vorlage begonnen, Lösung A wurde hierbei mit einer konstanten Zugabegeschwindigkeit von 98,0 g/h über 10 min zugegeben.

Lösung B wurde parallel mit einer konstanten Dosiergeschwindigkeit von 25,7 g/h solange zugegeben, bis kein Peroxid mehr in der Lösung nachgewiesen werden kann.

Anschließend wurde die erhaltene Polymerlösung mit 50 %iger NatriumhydroxidLösung auf einen pH-Wert von 6,5 eingestellt.

Das erhaltene Copolymer fiel in einer leicht gelblich gefärbten Lösung an, die einen Feststoffgehalt von 47,5 % aufwies. Das Gewichtsmittel der Molmasse des Copolymers betrug 42.000 g/Mol, die Polydispersität: 1,5; Umsatz (bestimmt mittels GPC) 85 %.

Die Starttemperatur kann mit ca. 20 °C verhältnismäßig hoch gewählt werden, was eine Kühlzeitersparnis in der Produktion bedeutet. Die Produktionszeiten werden durch die kurzen Reaktions-/ Dosierzeiten erheblich verkürzt. Es können hohe Feststoffgehalte des Produktes erreicht werden, da eine hohe Produktausbeute in kurzer Zeit erfolgt.

### Vergleichsbeispiel:

Die Synthese des Polymeres erfolgte bis zum Schritt der Dosierung der Lösung A mit konstanter Dosierrate analog zu oben beschriebenem Synthesebeispiel. Danach wurde wie folgt vorgegangen:
- die Zugabegeschwindigkeit der Lösung B betrug konstant 9,0 g/h bis zur Peroxidfreiheit der Reaktionsmischung
- der Rest der Lösung A wurde parallel nach folgendem Dosierprofil zugegeben:

| t (min) | 0 | 3 | 6 | 9 | 12 | 15 | 18 | 21 | 24 |
|---|---|---|---|---|---|---|---|---|---|
| Lösung A (g/h) | 33,3 | 37,3 | 40 | 40 | 37,3 | 33,3 | 28,3 | 22,3 | 16,6 |
| t (min) | 27 | 33 | 39 | 45 | | | | | |
| Lösung A (g/h) | 11,3 | 4 | 1,3 | 0 | | | | | |

Das erhaltene Copolymer fiel in einer leicht gelblich gefärbten Lösung an, die einen Feststoffgehalt von 47,0 % aufwies. Das Gewichtsmittel der Molmasse des Copolymers betrug 46.000 g/Mol, die Polydispersität: 1,8; Umsatz (bestimmt mittels GPC) 81 %.

### Analyse der Copolymere aus Synthese- und Vergleichsbeispiel:

Die Polymere aus Synthese- und den Vergleichsbeispiel wurden mittels Größenausschlusschromatographie bezüglich mittlere Molmasse und Umsatz analysiert (Säulenkombination: OH-Pak SB-G, OH-Pak SB 804 HQ und OH-Pak SB 802.5 HQ der Firma Shodex, Japan; Eluent: wässerige Lösung aus Ammoniumformiat (0,05 mol/l) 80 Vol-% und Acetonitril 20 Vol-%; Injektionsvolumen 100 µl; Flussrate 0,5 ml/min). Die Kalibration zur Bestimmung der mittleren Molmasse erfolgte mit linearen Polyethylenoxidstandards. Als Maß für den Umsatz wird der Peak des Copolymers auf eine relative Höhe von 1 normiert und die Fläche des Peaks des nicht umgesetzten Makromomers/PEG-haltigen Oligomers als Maß für den Gehalt an Restmonomer verwendet.

### Anwendungsbeispiele

Die Polymere aus den Synthese- und den Vergleichsbeispielen wurden auf ihre Eigenschaften als Betonfließmittel in einem geeigneten Testsystem untersucht. Hierzu wurden alle Polymere mit Wasser auf einen Wirkstoffgehalt von 30 Gew.-% verdünnt und mit geringen Mengen eines konventionellen Entschäumers zur Steuerung des Luftporengehalts versetzt.

Es wurden zunächst 7,00 kg Portlandzement CEM I 42,5 R, 2,00 kg Füllers Calcit MS 12, 5,45 kg Quarzsand der Körnung 0 - 1 mm, 16,98 kg Sand der Körnung 0 - 4 mm, 5,65 kg Kies der Körnung 4 - 8 mm sowie 18,60 kg Kies der Körnung 8 - 16mm in einem Zwangsmischer 10 Sekunden lang trocken gemischt. Dann wurden 0,5 kg Wasser zugegeben und weitere 120 Sekunden gemischt. Anschließend wurden 3,61 kg Wasser zugegeben und weitere 60 Sekunden gemischt, danach jeweils 25,66 g Polymer zugegeben und weitere 60 Sekunden gemischt (entspricht einem Wasser/Zementverhältnis von 0,59 und einer Polymerdosierung von 0,11 % Feststoff bezogen auf die Zementeinwaage). Anschließend wurde das Ausbreitmaß gemäß DIN EN 12350-5 direkt nach der Herstellung sowie nach 10 und 30 Minuten bestimmt. Folgende Werte wurden ermittelt:

| | Ausbreitmaß in cm | | | Slump in cm | | | Slump flow in cm | | |
|---|---|---|---|---|---|---|---|---|---|
| Fließmittel | 0 min | 10 min | 30 min | 0 min | 10 min | 30 min | 0 min | 10 min | 30 min |
| Vergleichsbeispiel | 59,5 | 46,5 | 32 | 24 | 19 | 3 | 57 | 33 | 20 |
| Synthesebeispiel | 60,5 | 51,5 | 34 | 24 | 21 | 3,5 | 58 | 38 | 20 |

Die gemäß dem erfindungsgemäßen Verfahren hergestellten Copolymere zeigen eine verbesserte Wasserreduktion - erkennbar an dem höheren Anfangsausbreitmaß, gleichzeitig aber auch eine verbesserte Konsistenzhaltung was auf die homogenere Verteilung der Monomereinheiten in der Polymerkette zurückzuführen ist. Hierfür spricht auch die geringere Polydispersität des Polymers nach Synthesbeispiel 1 im Vergleich zu der des Polymers nach Vergleichsbeispiel, was ein weiterer Indikator für eine höhere Homogenität des Polymers ist.

## Patentansprüche

1. Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer, Säuremonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, das molare Verhältnis von insgesamt eingesetztem Säuremonomer zu insgesamt eingesetztem Polyethermakromonomer 20 : 1 bis 1 : 1 beträgt, das molare Verhältnis von in den Polymerisationsreaktor vorgelegten Säuremonomer zu dem in den Polymerisationsreaktor eindosierten Säuremonomer 10 : 1 bis 1 : 10 beträgt und die Dosierung des Säuremonomers mit der Maßgabe erfolgt, dass mindestens 70 Mol-% des insgesamt eindosierten Säuremonomers mit einer konstanten oder begrenzt variierenden Dosierrate innerhalb von 5 bis 19 Minuten eindosiert werden, wobei begrenzt variierende Dosierrate bedeutet, dass die maximale Zugaberate höchstens um den Faktor 3 höher ist als die minimale Zugaberate.

2. Verfahren nach Anspruch 1, **dadurch gekennzeichnet, dass** mindestens 85 Mol-% des insgesamt eindosierten Säuremonomers mit einer konstanten oder begrenzt variierenden Dosierrate innerhalb von 7 bis 17 Minuten eindosiert werden, wobei begrenzt variierende Dosierrate bedeutet, dass die maximale Zugaberate höchstens um den Faktor 1,7 höher, bevorzugt höchstens um den Faktor 1,15, höher ist als die minimale Zugaberate.

3. Verfahren nach einem der Anspruch 1 oder 2, **dadurch gekennzeichnet, dass** durch die Umsetzung des Säuremonomers eine Struktureinheit im Copolymer erzeugt wird, die gemäß einer der allgemeinen Formeln (Ia), (Ib), (Ic) und/oder (Id) ist 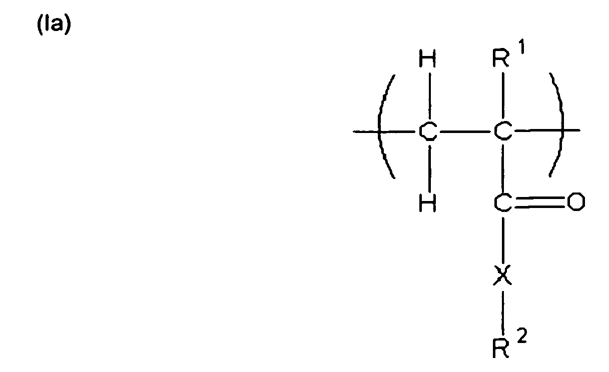 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 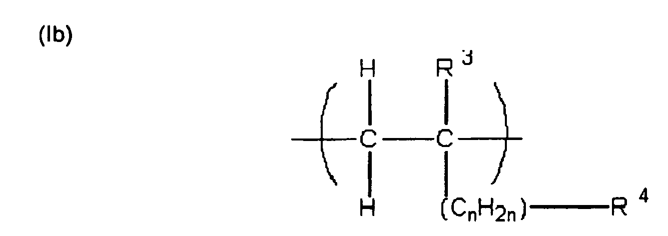 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 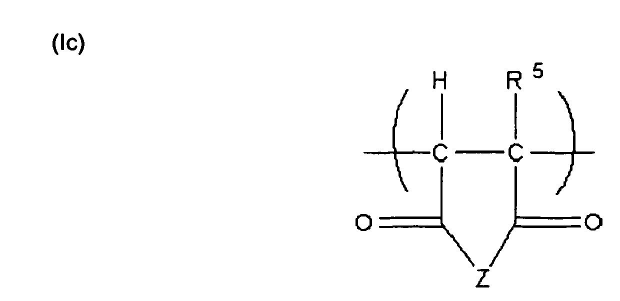 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 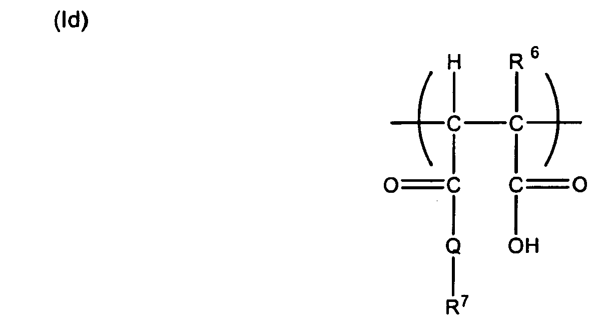 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = Cₓ·H₂ₓ· mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

4. Verfahren nach einem der Ansprüche 1 bis 3, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

5. Verfahren nach einem der Ansprüche 1 bis 4, **dadurch gekennzeichnet, dass** durch die Umsetzung des Polyethermakromonomers eine Struktureinheit im Copolymer erzeugt wird, die gemäß einer der allgemeinen Formeln (IIa), (IIb) und/oder (IIc) ist 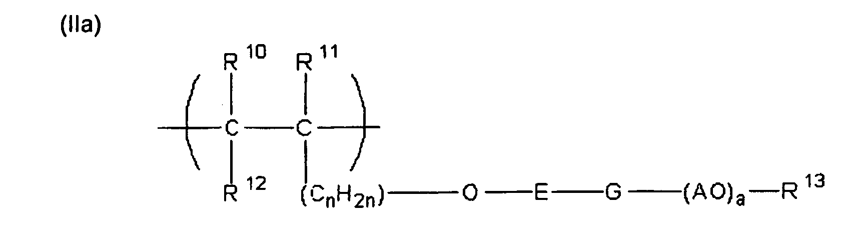 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 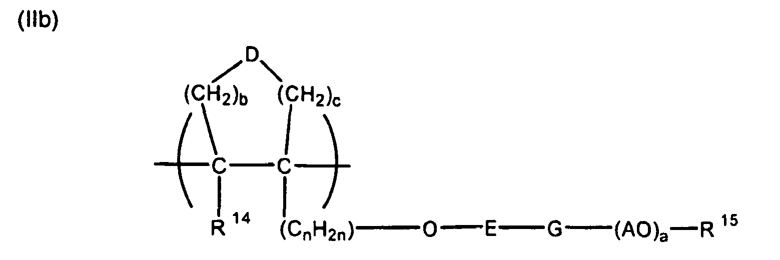 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 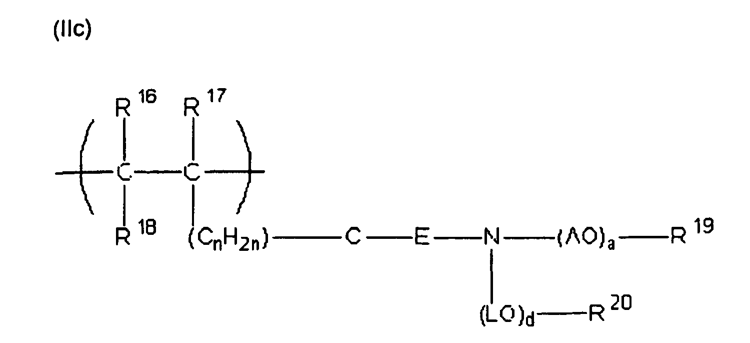 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

6. Verfahren nach einem der Ansprüche 1 bis 5, **dadurch gekennzeichnet, dass** als Polyethermakromonomer ein Vinylether mit bevorzugt einer arithmetisch mittleren Zahl an Oxyalkylengruppen von 4 bis 340 eingesetzt wird.

7. Verfahren nach Anspruch 6, **dadurch gekennzeichnet, dass** der Vinylether als alkoxylierter 1,4-Dihydroxybutyl-1-vinylether mit bevorzugt einer arithmetisch mittleren Zahl an Oxyalkylengruppen von 7 bis 300 vorliegt.

8. Verfahren nach einem der Ansprüche 1 bis 5, **dadurch gekennzeichnet, dass** als Polyethermakromonomer alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 300 eingesetzt wird.

9. Verfahren nach einem der Ansprüche 1 bis 8, **dadurch gekennzeichnet, dass** das wässrige Medium, während der Umsetzung gekühlt wird.

10. Verfahren nach einem der Ansprüche 1 bis 9, **dadurch gekennzeichnet, dass** ein H₂O₂ enthaltendes Redoxinitiatorsystem als radikalischer Polymerisationsinitiator eingesetzt wird und vor der Eindosierung des Säuremonomers der pH-Wert des wässrigen Mediums 4,6 bis 14,0 sowie die Temperatur des wässrigen Mediums 5 bis 50 °C beträgt und nach der Eindosierung von 70 Mol-% des insgesamt eindosierten Säuremonomers der pH-Wert des wässrigen Mediums 4,8 bis 6,2 sowie die Temperatur des wässrigen Mediums 20 bis 70 °C, beträgt.

11. Verfahren nach Anspruch 10, **dadurch gekennzeichnet, dass** vor der Eindosierung des Säuremonomers die Temperatur des wässrigen Mediums 10 bis 29 °C, bevorzugt 15 bis 25 °C, beträgt und nach der Eindosierung von 70 Mol-% des insgesamt eindosierten Säuremonomers die Temperatur des wässrigen Mediums 20 bis 49 °C, bevorzugt 25 bis 39 °C, beträgt.

12. Verfahren nach einem der Ansprüche 1 bis 6, **dadurch gekennzeichnet, dass** als radikalischer Polymerisationsinitiator ein H₂O₂/FeSO₄ enthaltendes Redoxinitiatorsystem eingesetzt wird, welches zusammen mit einem Reduktionsmittel verwendet wird, wobei das Reduktionsmittel bevorzugt vorliegt in Form von Natriumsulfit, Dinatriumsalz der 2-Hydroxy-2-sulfinatoessigsäure, Dinatriumsalz der 2-Hydroxy-2-sulfonatoessigsäure, Natriumhydroxymethansulfinat, Ascorbinsäure und/oder Iso-Ascorbinsäure.

13. Verfahren nach einem der Ansprüche 1 bis 12, **dadurch gekennzeichnet, dass** das wässrige Medium in Form einer wässrigen Lösung vorliegt.

14. Verfahren nach einem der Ansprüche 1 bis 13, **dadurch gekennzeichnet, dass** insgesamt mindestens 45 Mol-%, bevorzugt mindestens 80 Mol-% aller Struktureinheiten des Copolymers durch Einpolymerisieren von Säuremonomer und Polyethermakromonomer erzeugt werden.

15. Verfahren nach einem der Ansprüche 1 bis 14, **dadurch gekennzeichnet, dass** ein Kettenregler, welcher bevorzugt in gelöster Form vorliegt, in den Polymerisationsreaktor eingeleitet wird.

## Claims

1. Process for the preparation of a copolymer in semicontinuous operation in a polymerization apparatus, comprising a polymerization reactor connected to a metering device, in each case acid monomer being initially taken in the metering device and polyether macromonomer, acid monomer, and water in the polymerization reactor, acid monomer being metered from the metering device into the polymerization reactor, free radical polymerization initiator being passed into the polymerization reactor before and/or during the metering of the acid monomer into the polymerization reactor so that an aqueous medium in which acid monomer and polyether macromonomer are reacted with formation of the copolymer by free radical polymerization forms in the polymerization reactor, the molar ratio of acid monomer used altogether to polyether macromonomer used altogether being 20:1 to 1:1, the molar ratio of acid monomer initially taken in the polymerization reactor to the acid monomer metered into the polymerization reactor being 10:1 to 1:10 and the metering of the acid monomer being effected with the proviso that at least 70 mol% of the acid monomer metered in altogether are metered in in the course of 5 to 19 minutes at a metering rate that is constant or varies to a limited extent, metering rate which varies to a limited extent meaning that the maximum rate of addition is at most a factor of 3 higher than the minimum rate of addition.

2. Process according to Claim 1, **characterized in that** at least 85 mol% of the acid monomer metered in altogether are metered in in the course of 7 to 17 minutes at a metering rate which is constant or varies to a limited extent, a metering rate which varies to a limited extent meaning that the maximum rate of addition is at most a factor of 1.7 higher, preferably at most a factor of 1.15 higher, than the minimum rate of addition.

3. Process according to either of Claims 1 and 2, **characterized in that** a structural unit is produced in the copolymer by the reaction of the acid monomer, which structural unit is according to one of the general formulae (Ia), (Ib), (Ic) and/or (Id) 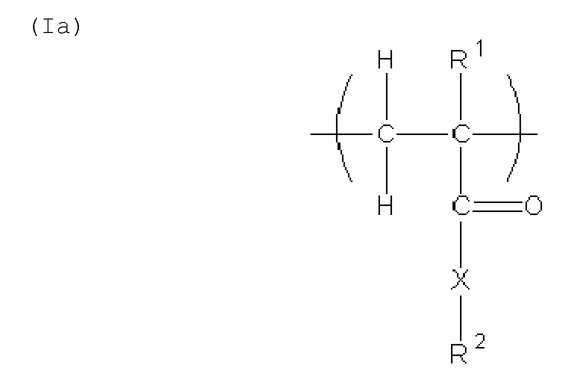 where
R¹ is identical or different and is represented by H and/or a straight-chain or branched C₁ - C₄ alkyl group;
X is identical or different and is represented by NH-(CₙH₂ₙ) where n = 1, 2, 3 or 4 and/or O-(CₙH₂ₙ) where n = 1, 2, 3 or 4 and/or by a unit not present;
R² is identical or different and is represented by OH, SO₃H, PO₃H₂, O-PO₃H₂ and/or para-substituted C₆H₄-SO₃H, with the proviso that, if X is a unit not present, R² is represented by OH; 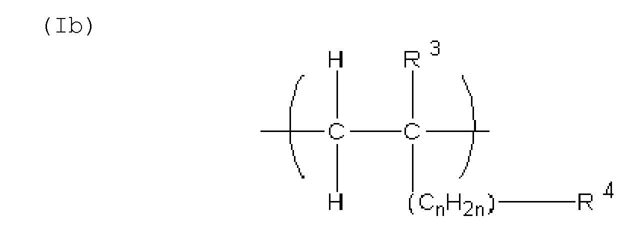 where
R³ is identical or different and is represented by H and/or a straight-chain or branched C₁ - C₄ alkyl group;
n = 0, 1, 2, 3 or 4;
R⁴ is identical or different and is represented by SO₃H, PO₃H₂, O-PO₃H₂ and/or C₆H₄-SO₃H present in para-substituted form; 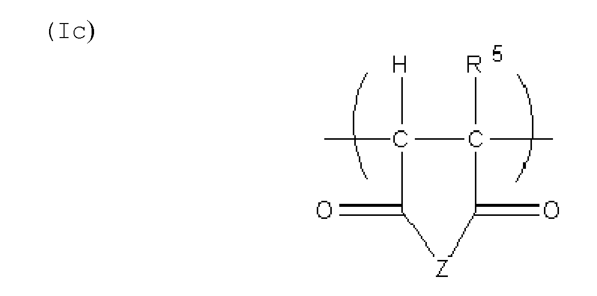 where
R⁵ is identical or different and is represented by H and/or a straight-chain or branched C₁ - C₄ alkyl group;
Z is identical or different and is represented by 0 and/or NH; 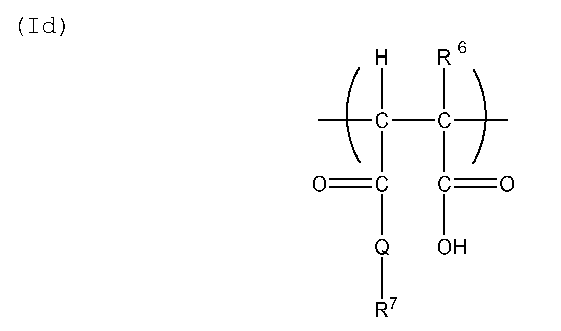 where
R⁶ is identical or different and is represented by H and/or a straight-chain or branched C₁ - C₄ alkyl group;
Q is identical or different and is represented by NH and/or O;
R⁷ is identical or different and is represented by H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄)-OPO₃H₂ and/or (CₘH₂ₘ)ₑ-O-(A'O)_{α}-R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α = an integer from 1 to 350 with R⁹ identical or different and represented by a straight-chain or branched C₁ - C₄ alkyl group.

4. Process according to any of Claims 1 to 3, **characterized in that** the acid monomer used is methacrylic acid, acrylic acid, maleic acid, maleic anhydride, a monoester of maleic acid or a mixture of a plurality of these components.

5. Process according to any of Claims 1 to 4, **characterized in that** a structural unit is produced in the copolymer by the reaction of the polyether macromonomer, which structural unit is according to one of the general formulae (IIa), (IIb) and/or (IIc) 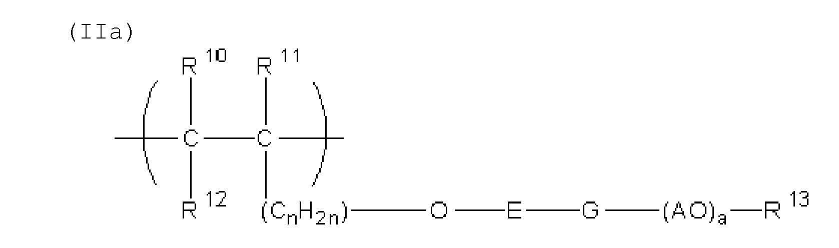 where
R¹⁰, R¹¹ and R¹² are in each case identical or different and, independently of one another, are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or a unit not present;
G is identical or different and is represented by 0, NH and/or CO-NH, with the proviso that, if E is a unit not present, G is also present as a unit not present;
A is identical or different and is represented by CₓH₂ₓ where x = 2, 3, 4 and/or 5 (preferably x = 2) and/or CH₂CH(C₆H₅);
n is identical or different and is represented by 0, 1, 2, 3, 4 and/or 5;
a is identical or different and is represented by an integer from 2 to 350 (preferably 10 - 200);
R¹³ is identical or different and is represented by H, a straight-chain or branched C₁ - C₄ alkyl group, CO-NH₂, and/or COCH₃; 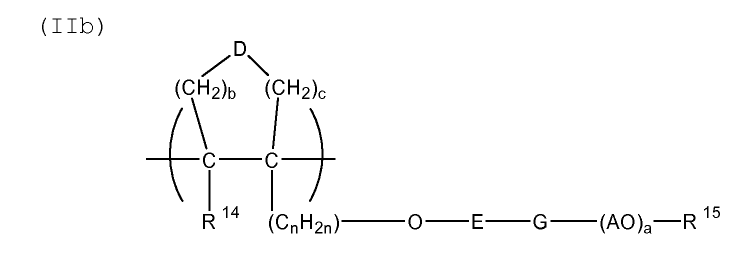 where
R¹⁴ is identical or different and is represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or by a unit not present;
G is identical or different and is represented by a unit not present, 0, NH and/or CO-NH, with the proviso that, if E is a unit not present, G is also present as a unit not present;
A is identical or different and is represented by CₓH₂ₓ where x = 2, 3, 4 and/or 5 and/or CH₂CH(C₆H₅);
n is identical or different and is represented by 0, 1, 2, 3, 4 and/or 5;
a is identical or different and is represented by an integer from 2 to 350;
D is identical or different and is represented by a unit not present, NH and/or 0, with the proviso that if D is a unit not present: b = 0, 1, 2, 3 or 4 and c = 0, 1, 2, 3 or 4, where b + c = 3 or 4, and with the proviso that if D is NH and/or 0: b = 0, 1, 2 or 3, c = 0, 1, 2 or 3, where b + c = 2 or 3;
R¹⁵ is identical or different and is represented by H, a straight-chain or branched C₁ - C₄ alkyl group, CO-NH₂, and/or COCH₃; 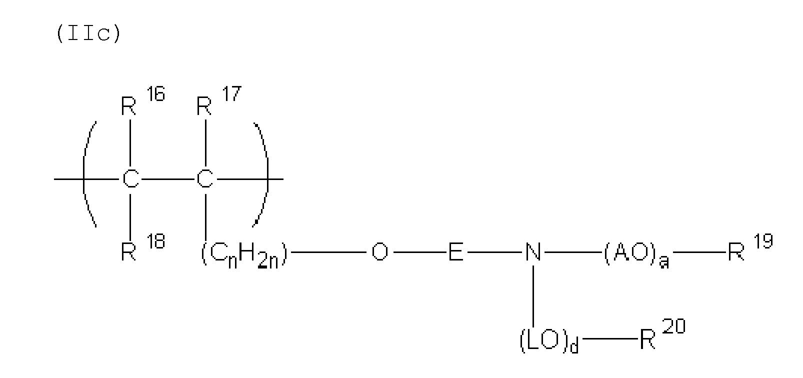 where
R¹⁶, R¹⁷ and R¹⁸ in each case are identical or different and, independently of one another, are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀ and/or C₆H₄ present in ortho-, meta- or para-substituted form;
A is identical or different and is represented by CₓH₂ₓ where x = 2, 3, 4 and/or 5 and/or CH₂CH(C₆H₅);
n is identical or different and is represented by 0, 1, 2, 3, 4 and/or 5;
L is identical or different and is represented by CₓH₂ₓ where x = 2, 3, 4 and/or 5 and/or CH₂-CH(C₆H₅);
a is identical or different and is represented by an integer from 2 to 350;
d is identical or different and is represented by an integer from 1 to 350;
R¹⁹ is identical or different and is represented by H and/or a straight-chain or branched C₁ - C₄ alkyl group,
R²⁰ is identical or different and is represented by H and/or a straight-chain C₁ - C₄ alkyl group.

6. Process according to any of Claims 1 to 5, **characterized in that** the polyether macromonomer used is a vinyl ether having preferably an arithmetic mean number of 4 to 340 oxyalkylene groups.

7. Process according to Claim 6, **characterized in that** the vinyl ether is present as alkoxylated 1,4-dihydroxybut-1-yl vinyl ether having preferably an arithmetic mean number of 7 to 300 oxyalkylene groups.

8. Process according to any of Claims 1 to 5, **characterized in that** the polyether macromonomer used is alkoxylated isoprenol and/or alkoxylated (meth)allyl alcohol and/or vinylated methylpolyalkylene glycol having preferably in each case an arithmetic mean number of 4 to 300 oxyalkylene groups.

9. Process according to any of Claims 1 to 8, **characterized in that** the aqueous medium is cooled during the reaction.

10. Process according to any of Claims 1 to 9, **characterized in that** an H₂O₂-containing redox initiator system is used as the free radical polymerization initiator and the pH of the aqueous medium is 4.6 to 14.0 and the temperature of the aqueous medium is 5 to 50°C before the acid monomer is metered in and the pH of the aqueous medium is 4.8 to 6.2 and the temperature of the aqueous medium is 20 to 70°C after 70 mol% of the acid monomer metered in altogether has been metered in.

11. Process according to Claim 10, **characterized in that** the temperature of the aqueous medium is 10 to 29°C, preferably 15 to 25°C, before the acid monomer is metered in and the temperature of the aqueous medium is 20 to 49°C, preferably 25 to 39°C, after 70 mol% of the acid monomer metered in altogether has been metered in.

12. Process according to any of Claims 1 to 6, **characterized in that** the free radical polymerization initiator used is an H₂O₂/FeSO₄ -containing redox initiator system which is used together with a reducing agent, the reducing agent preferably being present in the form of sodium sulphite, disodium salt of 2-hydroxy-2-sulphinatoacetic acid, disodium salt of 2-hydroxy-2-sulphonatoacetic acid, sodium hydroxymethanesulphinate, ascorbic acid and/or isoascorbic acid.

13. Process according to any of Claims 1 to 12, **characterized in that** the aqueous medium is present in the form of a aqueous solution.

14. Process according to any of Claims 1 to 13, **characterized in that** altogether at least 45 mol%, preferably at least 80 mol%, of all structural units of the copolymer are produced by incorporation of acid monomer and polyether macromonomer in the form of polymerized units.

15. Process according to any of Claims 1 to 14, **characterized in that** a chain-transfer agent which is preferably present in dissolved form is passed into the polymerization reactor.

## Revendications

1. Procédé de fabrication d'un copolymère en mode semi-continu dans un dispositif de polymérisation contenant un réacteur de polymérisation relié à un dispositif d'alimentation, un monomère acide étant chargé initialement dans le dispositif d'alimentation, et un macromonomère de polyéther, un monomère acide et de l'eau étant chargés initialement dans le réacteur de polymérisation, le monomère acide du dispositif d'alimentation étant introduit dans le réacteur de polymérisation, un initiateur de polymérisation radicalaire étant introduit dans le réacteur de polymérisation avant et/ou pendant l'introduction du monomère acide dans le réacteur de polymérisation, de manière à ce qu'un milieu aqueux se forme dans le réacteur de polymérisation, dans lequel le monomère acide et le macromonomère de polyéther réagissent par polymérisation radicalaire pour former le copolymère, le rapport molaire entre le monomère acide utilisé au total et le macromonomère de polyéther utilisé au total étant de 20:1 à 1:1, le rapport molaire entre le monomère acide chargé initialement dans le réacteur de polymérisation et le monomère acide introduit dans le réacteur de polymérisation étant de 10:1 à 1:10, et l'introduction du monomère acide ayant lieu à condition qu'au moins 70 % en moles du monomère acide introduit au total soit introduit en 5 à 19 minutes avec une vitesse d'alimentation constante ou variant de manière limitée, une vitesse d'alimentation variant de manière limitée signifiant que la vitesse d'alimentation maximale est supérieure au plus d'un facteur de 3 à la vitesse d'alimentation minimale.

2. Procédé selon la revendication 1, **caractérisé en ce qu'**au moins 85 % du monomère acide introduit au total est introduit en 7 à 17 minutes avec une vitesse d'alimentation constante ou variant de manière limitée, une vitesse d'alimentation variant de manière limitée signifiant que la vitesse d'alimentation maximale est supérieure au plus d'un facteur de 1,7, de préférence au plus d'un facteur de 1,15, à la vitesse d'alimentation minimale.

3. Procédé selon l'une quelconque des revendications 1 ou 2, **caractérisé en ce que** la réaction du monomère acide forme une unité structurale dans le copolymère qui est selon une des formules générales (Ia), (Ib), (Ic) et/ou (Id) 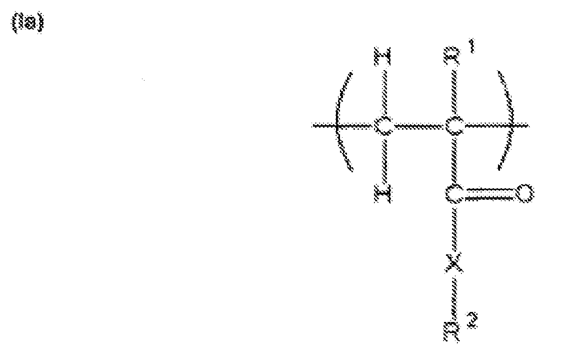 avec
R¹ identiques ou différents et représentés par H et/ou un groupe alkyle en C₁-C₄ non ramifié ou ramifié ;
X identiques ou différents et représentés par NH-(CₙH₂ₙ) avec n = 1, 2, 3 ou 4 et/ou O-(CₙH₂ₙ) avec n = 1, 2, 3 ou 4 et/ou par une unité inexistante ;
R² identiques ou différents et représentés par OH, SO₃H, PO₃H₂, O-PO₃H₂ et/ou C₆H₄-SO₃H para-substitué, à condition que si X est une unité inexistante, R² soit représenté par OH ; 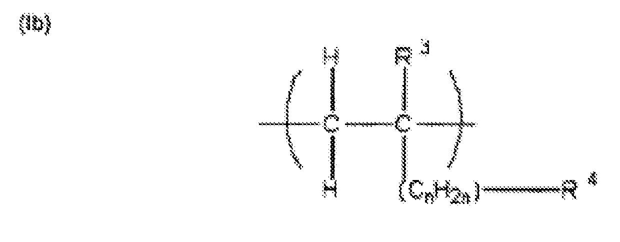 avec
R³ identiques ou différents et représentés par H et/ou un groupe alkyle en C₁-C₄ non ramifié ou ramifié ;
n = 0, 1, 2, 3 ou 4 ;
R⁴ identiques ou différents et représentés par SO₃H, PO₃H₂, O-PO₃H₂ et/ou C₆H₄-SO₃H para-substitué ; 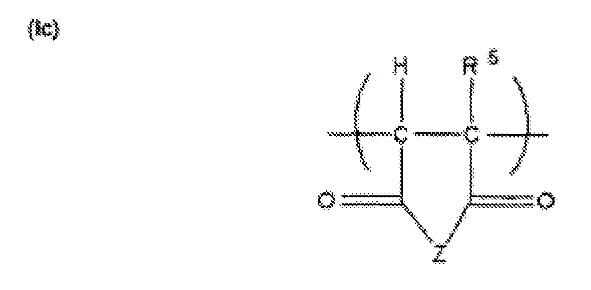 avec
R⁵ identiques ou différents et représentés par H et/ou un groupe alkyle en C₁-C₄ non ramifié ou ramifié ;
Z identiques ou différents et représentés par O et/ou NH ; 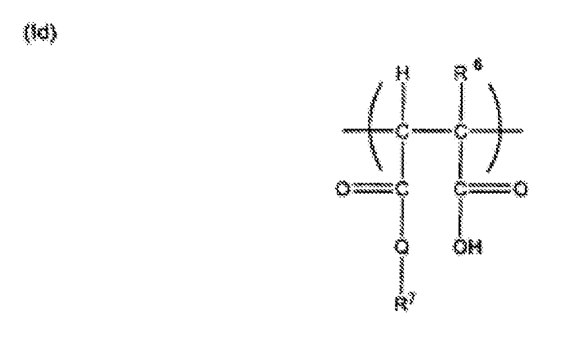 avec
R⁶ identiques ou différents et représentés par H et/ou un groupe alkyle en C₁-C₄ non ramifié ou ramifié ;
Q identiques ou différents et représentés par NH et/ou O ;
R⁷ identiques ou différents et représentés par H, (CₙH₂ₙ)-SO₃H avec n = 0, 1, 2, 3 ou 4, (CₙH₂ₙ)-OH avec n = 0, 1, 2, 3 ou 4 ; (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = Cₓ'H_{2x'} avec x' = 2, 3, 4 ou 5 et/ou CH₂C(C₆H₅)H-, α = un nombre entier de 1 à 350 avec R⁹ identiques ou différents et représentés par un groupe alkyle en C₁-C₄ non ramifié ou ramifié.

4. Procédé selon l'une quelconque des revendications 1 à 3, **caractérisé en ce que** l'acide méthacrylique, l'acide acrylique, l'acide maléique, l'anhydride de l'acide maléique, un semi-ester de l'acide maléique ou un mélange de plusieurs de ces composants est utilisé en tant que monomère acide.

5. Procédé selon l'une quelconque des revendications 1 à 4, **caractérisé en ce que** la réaction du macromonomère de polyéther forme une unité structurale dans le copolymère, qui est selon une des formules générales (IIa), (IIb) et/ou (IIc) 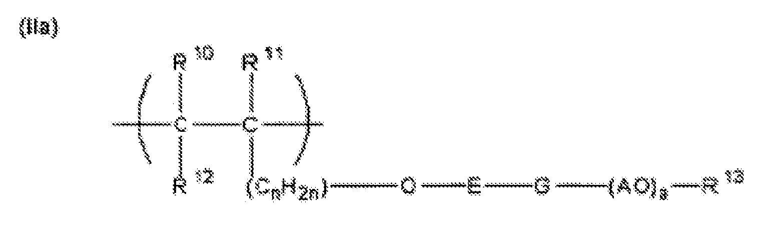 avec R¹⁰, R¹¹ et R¹² chacun identiques ou différents et représentés indépendamment les uns des autres par H et/ou un groupe alkyle en C₁-C₄ non ramifié ou ramifié ; E identiques ou différents et représentés par un groupe alkylène en C₁-C₆ non ramifié ou ramifié, un groupe cyclohexyle, CH₂-C₆H₁₀, C₆H₄ ortho-, méta- ou para-substitué et/ou une unité inexistante ;
G identiques ou différents et représentés par O, NH et/ou CO-NH, à condition que si E est une unité inexistante, G se présente également sous la forme d'une unité inexistante ;
A identiques ou différents et représentés par CₓH₂ₓ avec x = 2, 3, 4 et/ou 5 (de préférence x = 2) et/ou CH₂CH(C₆H₅) ;
n identiques ou différents et représentés par 0, 1, 2, 3, 4 et/ou 5 ;
a identiques ou différents et représentés par un nombre entier de 2 à 350 (de préférence 10 à 200) ;
R¹³ identiques ou différents et représentés par H, un groupe alkyle en C₁-C₄ non ramifié ou ramifié, CO-NH₂ et/ou COCH₃ ; 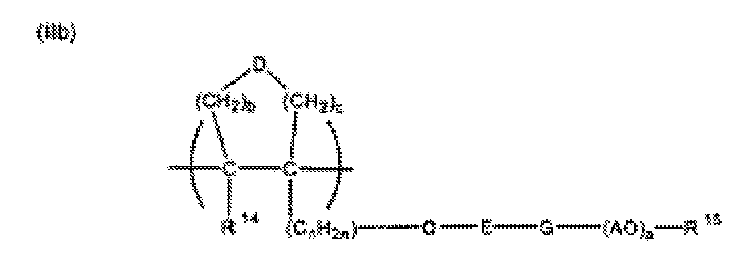 avec
R¹⁴ identiques ou différents et représentés par H et/ou un groupe alkyle en C₁-C₄ non ramifié ou ramifié ;
E identiques ou différents et représentés par un groupe alkylène en C₁-C₆ non ramifié ou ramifié, un groupe cyclohexyle, CH₂-C₆H₁₀, C₆H₄ ortho-, méta- ou para-substitué et/ou par une unité inexistante ;
G identiques ou différents et représentés par une unité inexistante, O, NH et/ou CO-NH, à condition que si E est une unité inexistante, G se présente également sous la forme d'une unité inexistante ;
A identiques ou différents et représentés par CₓH₂ₓ avec x = 2, 3, 4 et/ou 5 et/ou CH₂CH(C₆H₅) ;
n identiques ou différents et représentés par 0, 1, 2, 3, 4 et/ou 5 ;
a identiques ou différents et représentés par un nombre entier de 2 à 350 ;
D identiques ou différents et représentés par une unité inexistante, NH et/ou O, à condition que si D est une unité inexistante : b = 0, 1, 2, 3 ou 4 et c = 0, 1, 2, 3 ou 4, avec b + c = 3 ou 4, et à condition que lorsque D est NH et/ou O : b = 0, 1, 2 ou 3, c = 0, 1, 2 ou 3, avec b + c = 2 ou 3 ;
R¹⁵ identiques ou différents et représentés par H, un groupe alkyle en C₁-C₄ non ramifié ou ramifié, CO-NH₂ et/ou COCH₃ ; 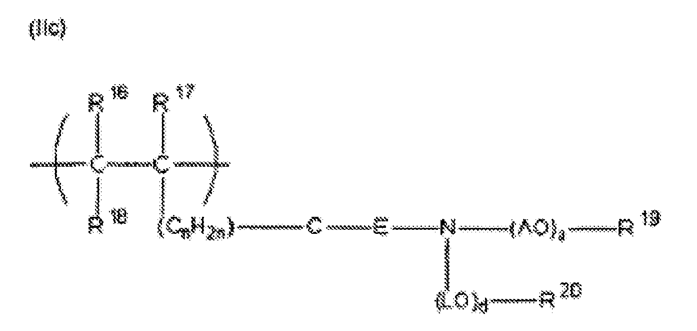 avec
R¹⁶, R¹⁷ et R¹⁸ chacun identiques ou différents et représentés indépendamment les uns des autres par H et/ou un groupe alkyle en C₁-C₄ non ramifié ou ramifié ; E identiques ou différents et représentés par un groupe alkylène en C₁-C₆ non ramifié ou ramifié, un groupe cyclohexyle, CH₂-C₆H₁₀ et/ou C₆H₄ ortho-, méta- ou para-substitué ;
A identiques ou différents et représentés par CₓH₂ₓ avec x = 2, 3, 4 et/ou 5 et/ou CH₂CH(C₆H₅) ;
n identiques ou différents et représentés par 0, 1, 2, 3, 4 et/ou 5 ;
L identiques ou différents et représentés par CₓH₂ₓ avec x = 2, 3, 4 et/ou 5 et/ou CH₂-CH(C₆H₅) ;
a identiques ou différents et représentés par un nombre entier de 2 à 350 ;
d identiques ou différents et représentés par un nombre entier de 1 à 350 ;
R¹⁹ identiques ou différents et représentés par H et/ou un groupe alkyle en C₁-C₄ non ramifié ou ramifié ;
R²⁰ identiques ou différents et représentés par H et/ou un groupe alkyle en C₁-C₄ non ramifié.

6. Procédé selon l'une quelconque des revendications 1 à 5, **caractérisé en ce qu'**un éther de vinyle contenant de préférence un nombre arithmétiquement moyen de groupes oxyalkylène de 4 à 340 est utilisé en tant que macromonomère de polyéther.

7. Procédé selon la revendication 6, **caractérisé en ce que** l'éther de vinyle se présente sous la forme d'un éther de 1,4-dihydroxybutyl-1-vinyle alcoxylé contenant de préférence un nombre arithmétiquement moyen de groupes oxyalkylène de 7 à 300.

8. Procédé selon l'une quelconque des revendications 1 à 5, **caractérisé en ce qu'**un isoprénol alcoxylé et/ou un alcool (méth)allylique alcoxylé et/ou un méthylpolyalkylène glycol vinylé contenant de préférence chacun un nombre arithmétiquement moyen de groupes oxyalkylène de 4 à 300 est utilisé en tant que macromonomère de polyéther.

9. Procédé selon l'une quelconque des revendications 1 à 8, **caractérisé en ce que** le milieu aqueux est refroidi pendant la réaction.

10. Procédé selon l'une quelconque des revendications 1 à 9, **caractérisé en ce qu'**un système initiateur redox contenant H₂O₂ est utilisé en tant qu'initiateur de polymérisation radicalaire et, avant l'introduction du monomère acide, le pH du milieu aqueux est de 4,6 à 14,0 et la température du milieu aqueux est de 5 à 50 °C et, après l'introduction de 70 % en moles du monomère acide introduit au total, le pH du milieu aqueux est de 4,8 à 6,2 et la température du milieu aqueux est de 20 à 70 °C.

11. Procédé selon la revendication 10, **caractérisé en ce qu'**avant l'introduction du monomère acide, la température du milieu aqueux est de 10 à 29 °C, de préférence de 15 à 25 °C, et, après l'introduction de 70 % en moles du monomère acide introduit au total, la température du milieu aqueux est de 20 à 49 °C, de préférence de 25 à 39 °C.

12. Procédé selon l'une quelconque des revendications 1 à 6, **caractérisé en ce qu'**un système initiateur redox contenant H₂O₂/FeSO₄ est utilisé en tant qu'initiateur de polymérisation radicalaire, qui est utilisé avec un agent réducteur, l'agent réducteur se présentant de préférence sous la forme de sulfite de sodium, d'un sel de disodium de l'acide 2-hydroxy-2-sulfinatoacétique, d'un sel de disodium de l'acide 2-hydroxy-2-sulfonatoacétique, d'hydroxyméthanesulfinate de sodium, d'acide ascorbique et/ou d'acide isoascorbique.

13. Procédé selon l'une quelconque des revendications 1 à 12, **caractérisé en ce que** le milieu aqueux se présente sous la forme d'une solution aqueuse.

14. Procédé selon l'une quelconque des revendications 1 à 13, **caractérisé en ce qu'**au total au moins 45 % en moles, de préférence au moins 80 % en moles, de toutes les unités structurales du copolymère sont formées par incorporation par polymérisation du monomère acide et du macromonomère de polyéther.

15. Procédé selon l'une quelconque des revendications 1 à 14, **caractérisé en ce qu'**un régulateur de chaînes, qui se présente de préférence sous forme dissoute, est introduit dans le réacteur de polymérisation.
